(19) Europäisches Patentamt / European Patent Office / Office européen des brevets

(11) **EP 4 589 534 A1**

(12) **EUROPEAN PATENT APPLICATION**
published in accordance with Art. 153(4) EPC

(43) Date of publication:
**23.07.2025 Bulletin 2025/30**

(21) Application number: **23864415.7**

(22) Date of filing: **27.06.2023**

(51) International Patent Classification (IPC):
**G06T 9/00** (2006.01)

(52) Cooperative Patent Classification (CPC):
**G06T 5/50; G06T 7/13; G06T 9/00**

(86) International application number:
**PCT/CN2023/102672**

(87) International publication number:
**WO 2024/055676 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 CN 202211125051**

(71) Applicant: **Shenzhen TCL New Technology Co.,
Ltd.
Shenzhen, Guangdong 518052 (CN)**

(72) Inventor: **CHEN, Bing
Shenzhen, Guangdong 518052 (CN)**

(74) Representative: **Herrero & Asociados, S.L.
Edificio Aqua - Agustín de Foxá, 4-10
28036 Madrid (ES)**

(54) **IMAGE COMPRESSION METHOD AND APPARATUS, COMPUTER DEVICE, AND COMPUTER READABLE STORAGE MEDIUM**

(57) Embodiments of the present application provide an image compression method and apparatus, a computer device, and a computer readable storage medium. The method comprises: according to channel values of pixel points in an image to be compressed, determining a plurality of image feature regions matched with a target object in the image to be compressed; according to compression parameters corresponding to each image feature region, respectively compressing each image feature region to obtain compressed image regions; and generating a compressed image according to the compressed image regions. The embodiments of the present application can improve the definition of the compressed image.

Obtain an image to be compressed, and the image to be compressed comprises a target object. — S101

Determine a plurality of image feature regions in the image to be compressed that match the target object according to a channel value of a pixel in the image to be compressed. — S102

Obtain a compression parameter corresponding to each image feature region, and compress each image feature region according to the compression parameter corresponding to each image feature region to obtain a compressed image region. — S103

Generate a compressed image according to the compressed image region. — S104

FIG. 2

**Description**

This application claims the priority of Chinese Patent Application No. 202211125051.8, entitled "IMAGE COMPRESSION METHOD AND APPARATUS, COMPUTER DEVICE, AND COMPUTER READABLE STORAGE MEDIUM", filed on September 15, 2022, the disclosure of which is incorporated herein by reference in its entirety.

FIELD OF THE DISCLOSURE

The present disclosure relates to the technical field of image compression, and more particularly, an image compression method, a device, a computing device and a computer-readable storage medium.

BACKGROUND

With the development of image compression technology, people increasingly want to compress images with high definition. Conventionally, the image is compressed as a whole, but the key information in the image is easily lost such that the compressed image becomes blurry and not clear enough.
In summary, there is a problem that the image is not clear after compression.

Technical issue

There is a problem that the image is not clear after compression.

Technical solution

The embodiment of the application provides an image compression method, a device, a computing device and a computer-readable storage medium, which can improve the clarity of the compressed image.
One objective of an embodiment of the present disclosure is to provide an image compression method. The method comprises:

obtaining an image to be compressed, and the image to be compressed comprises a target object;
determining a plurality of image feature regions in the image to be compressed that match the target object according to a channel value of a pixel in the image to be compressed;
obtaining a compression parameter corresponding to each image feature region, and compressing each image feature region according to the compression parameter corresponding to each image feature region to obtain a compressed image region;
generating a compressed image according to the compressed image region.

According to an embodiment of the present disclosure, an image compression device is disclosed. The image compression device includes:

an acquisition unit, configured to obtain an image to be compressed, and the image to be compressed comprises a target object;
a determining unit, configured to determine a plurality of image feature regions in the image to be compressed that match the target object according to a channel value of a pixel in the image to be compressed;
a compression unit, configured to obtain a compression parameter corresponding to each image feature region, and compress each image feature region according to the compression parameter corresponding to each image feature region to obtain a compressed image region; and
a generating unit, configured to generate a compressed image according to the compressed image region.

In some embodiments, the plurality of image feature regions comprise a first image feature region, a second image feature region and a third image feature region. The determining unit is configured to perform a boundary recognition on the target object according to the channel value of the pixel in the image to be compressed, so as to determine the first image feature region from the image to be compressed. The determining unit is configured to perform a feature recognition on the target object according to the channel value of the pixel in the first image feature region, so as to extract the second image feature region from the first image feature region. The determining unit is configured to determine a third image feature region from the image to be compressed according to the first image feature region, wherein the third image feature region does not contain the target object.
In some embodiments, the determining unit is configured to determine a grayscale image of the image to be compressed according to the channel value of the pixel in the image to be compressed, to identify an object boundary of the target object according to a gray value of a pixel in the grayscale image, and to extract the first image feature region matching the target object from the image to be compressed according to the object boundary.

In some embodiments, the determining unit is configured to determine a pixel type of the pixel in the image to be compressed, to determine a grayscale computing strategy corresponding to the pixel according to the pixel type, to use the grayscale computing strategy to calculate candidate gray values of the pixels according to the channel value of the pixel, and to generate the grayscale image of the image to be compressed according to the candidate grayscale value.

In some embodiments, the determining unit is configured to determine the position of the pixel in the image to be compressed, and to determine the pixel type of the pixel according to the position of the pixel.

In some embodiments, the grayscale calculation strategy comprises a first grayscale calculation strategy and a second grayscale calculation strategy. The determining unit is configured to obtain the pixel type of the pixel in the image to be compressed; when the pixel type is an edge pixel type, the determining unit is configured to use the first grayscale calculation strategy to calculate the candidate gray value of the pixel according to the channel value of the pixel. When the pixel type is not an edge pixel type, the determining unit is configured to use the second grayscale calculation strategy to calculate the candidate gray value of the pixel according to the channel value of the pixel.

In some embodiments, the determining unit is configured to perform a calculation on the channel value of the pixel by using the first gray scale calculation strategy to obtain a first calculated channel value, and to determine the candidate gray value of the pixel according to the first calculated channel value.

In some embodiments, the determining unit is configured to perform a calculation on the channel value of the pixel by using the second gray scale calculation strategy to obtain a second calculated channel value, and to determine the candidate gray value of the pixel according to the second calculated channel value.

In some embodiments, the determining unit is configured to determine a target pixel having a target gray value in the gray image according to the gray value of the pixel, and to determine the object boundary of the target object in the image to be compressed according to the target pixel.

In some embodiments, the determining unit is configured to obtain coordinates of the grayscale image in a target coordinate system, to extract a number of candidate pixels having the target gray value under the coordinates according to the gray values of the pixel in the gray image, and to determine the target pixel having the target gray value in the gray image according to the number of the candidate pixels.

In some embodiments, the determining unit is configured to determine a target coordinate corresponding the candidate pixels having a target number from the coordinates according to the number of the candidate pixels, and to extract the target pixel satisfying a preset number ratio from the candidate pixels according to the target coordinates, so as to obtain the target pixel having the target gray value in the gray image.

In some embodiments, the determining unit is configured to determine a regional feature value of the pixel in the first image feature region according to the channel value of the pixel in the first image feature region, to determine the target pixel value of the pixel according to a target channel value of the pixel in the first feature region and the first image feature region, and to extract a second image feature region matching the target object from the first image feature region according to the target pixel value.

In some embodiments, the determining unit is configured to perform a fusing operation on a candidate channel value in the channel value of the pixel in the first image feature region to obtain a fused channel value, and to determine the regional feature value of the pixel in the first image feature region according to the fused channel value.

In some embodiments, the candidate channel value comprises a first candidate channel value and a second candidate channel value. The determining unit is configured to use a first fusion function to perform a fusing operation on the first candidate channel value and the second candidate channel value to obtain a first initial fused channel value. The determining unit is configured to use a second fusion function to perform a fusing operation on the first candidate channel value and the second candidate channel value to obtain a second initial fused channel value. The determining unit is configured to use a third fusion function to perform a fusing operation on the first initial fused channel value and the second initial fused channel value to obtain the fused channel value.

In some embodiments, the target pixel value comprises a first target pixel value and a second target pixel value. when the target channel value of the pixel in the first image feature region is less than a channel value threshold and when the regional feature value is less than a first feature value threshold, the determining unit is configured to determine the target pixel value of the pixel to be the first target pixel value. When the target channel value of the pixel in the first image feature region is less than the channel value threshold and when the feature value of the region is greater than or equal to the first feature value threshold, the determining unit is configured to determine the target pixel value of the pixel to be the second target pixel value.

In some embodiments, the target pixel value comprises a first target pixel value and a second target pixel value. When the target channel value of the pixel in the first image feature region is greater than or equal to a channel value threshold and when the regional feature value is less than a second feature value threshold, the determining unit is configured to determine the target pixel value of the pixel to be the first target pixel value. When the target channel value of the pixel in the first image feature region is greater than or equal to the channel value threshold and when the regional feature value is greater than or equal to the second feature value threshold, the determining unit is configured to determine the target pixel value of the pixel to be the second target pixel value.

In some embodiments, the generating unit is configured to obtain the initial coordinate point of the image feature region in the target coordinate system; According to the initial coordinate point, the compressed image area corresponding to the image feature area is merged to obtain the merged image. Based on the merged image, the compressed image is determined.

In addition, the embodiment of the present disclosure provides a computing device comprising memory and a processor. The memory stores an application executable by the processor to perform the method provided in the embodiment of the present disclosure.

In addition, the embodiment of the present disclosure provides a computer-readable storage medium storing computer program executable by a processor to perform the method provided in the embodiment of the present disclosure.

In addition, the embodiment of the present disclosure provides a computer program product including computer program executable by a processor to perform the method provided in the embodiment of the present disclosure.

Advantageous effect

The embodiments of the present disclosure provide an image compression method. The method includes: obtaining an image to be compressed, and the image to be compressed comprises a target object; determining a plurality of image feature regions in the image to be compressed that match the target object according to a channel value of a pixel in the image to be compressed; obtaining a compression parameter corresponding to each image feature region, and compressing each image feature region according to the compression parameter corresponding to each image feature region to obtain a compressed image region; generating a compressed image according to the compressed image region. Because an embodiment of the present disclosure can determine a plurality of image feature regions in the image to be compressed that match the target object based on the channel value of a pixel in the image to be compressed, and compress the image feature regions by using the compression parameters corresponding to the image feature regions, so as to retain the key information in the image feature regions, thereby improving the clarity of the compressed images.

BRIEF DESCRIPTION OF THE DRAWINGS

In order to more clearly illustrate the technical solutions in the embodiments of the present disclosure, the drawings required to be used in the description of the embodiments will be briefly introduced below, and it is obvious that the drawings described below are only some embodiments of the present disclosure, and for those skilled in the art, other drawings can be acquired according to these drawings without creative labor.

FIG. 1 is a diagram of a scene of an image compression method according to an embodiment of the present disclosure.
FIG. 2 is a flow chart diagram of an image compression method according to an embodiment of the present disclosure.
FIG. 3 is a flow chart of determining a plurality of image feature regions matching the target object in the image to be compressed according to the channel value of the pixel in the image to be compressed according to an embodiment of the present disclosure.
FIG. 4 is a flow chart of identifying the target object as a boundary according to the channel value of the pixel in the image to be compressed, so as to determine the first image feature region from the image to be compressed according to an embodiment of the present disclosure.
FIG. 5 is a diagram of a grayscale image according to an embodiment of the present disclosure.
FIG. 6 is a diagram of a binary image according to an embodiment of the present disclosure.
FIG. 7 is a diagram of an image compression device according to an embodiment of the present disclosure.
FIG. 8 illustrates a schematic diagram of the computing device according to another embodiment of the present disclosure.

DETAILED DESCRIPTION OF THE PRESENT DISCLOSURE

The technical solution in the embodiment of the present disclosure will be clearly and completely described below in conjunction with the accompanying drawings in the embodiment of the present disclosure. Obviously, the described embodiments are only some embodiments of the present disclosure, not all embodiments. Based on the embodiments in the present disclosure, all other embodiments obtained by a person skilled in the art without creative work fall within the scope of protection of the present disclosure.

An embodiment of the present disclosure provides an image compression method, a device, a computing device, and a computer-readable storage medium. The image compression device can be integrated in a computing device, which can be a server, a terminal and other equipment.

The server can be an independent physical server, a server cluster or a distributed system composed of multiple physical servers, or a cloud server that provides cloud services, cloud databases, cloud computing, cloud functions, cloud storage, network services, cloud communications, middleware services, domain name services, security services, network acceleration services (Content Delivery Network, CDN), and basic cloud computing services such as big data and artificial intelligence platforms. Terminals can be smartphones, tablets, laptops, desktop computers, smart speakers, smart watches, etc., but they are not limited to that. Terminals and servers may be connected directly or indirectly by wired or wireless communication, and the present disclosure is not limited herein.

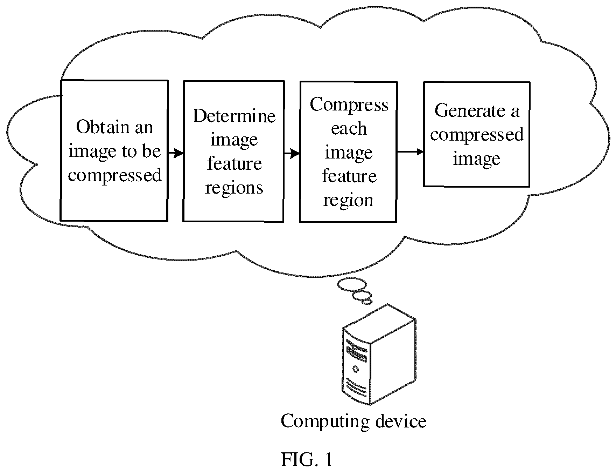

Please refer to FIG. 1. Taking an image compression device integrated in a computer equipment as an example. The computer equipment obtains an image to be compressed, where the image to be compressed comprises a target object; determine a plurality of image feature regions that match the target object in the image to be compressed according to the channel value of the pixel in the image to be compressed; obtain the compression parameters corresponding to each image feature region, and compress each image feature region according to the compression parameters corresponding to each image feature region to obtain a compressed image region; and generate a compressed image based on the compressed image.

The image to be compressed can be any image that includes the target object.

The target object includes at least one of people, natural landscapes, and objects.

The image feature region can refer to an image region to be compressed that is associated with the target object.

The compression parameter can be either the compression ratio or the information entropy of the image feature region.

The present embodiment will be described from the perspective of an image compression device, which can be specifically integrated into a computer device, which may be a server, a terminal, or a device such as a terminal. The terminal can include devices such as tablets, laptops, personal computers, wearable devices, virtual reality devices, or other smart devices that can obtain data.

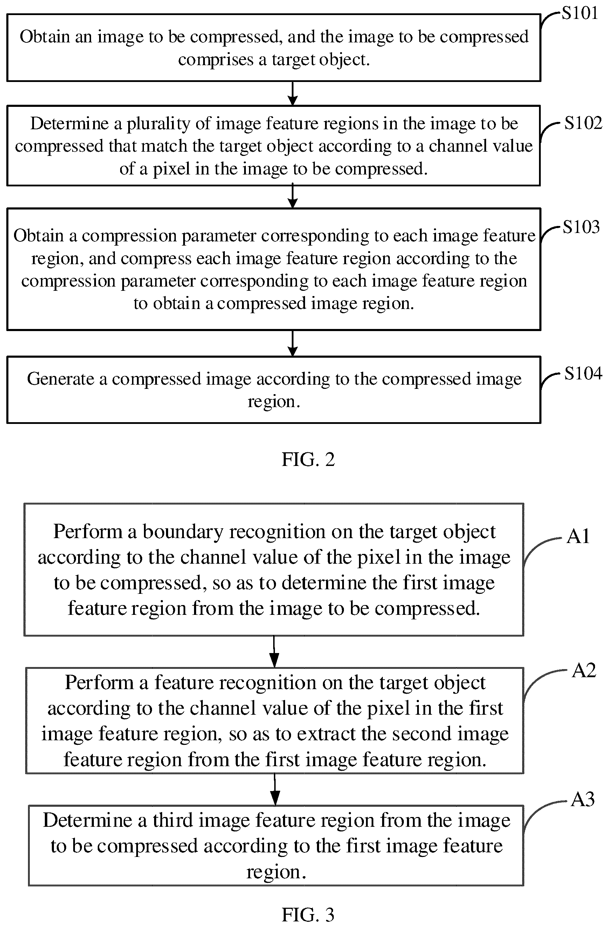

As shown in FIG. 2, the image compression method comprises steps S101- S104:

S101: obtaining an image to be compressed.

The target object is included in the image to be compressed.

S102: determining a plurality of image feature regions in the image to be compressed that match the target object according to a channel value of a pixel in the image to be compressed.

S103: obtaining a compression parameter corresponding to each image feature region, and compressing each image feature region according to the compression parameter corresponding to each image feature region to obtain a compressed image region.

S104: generating a compressed image according to the compressed image region.

The embodiments of the present disclosure provide an image compression method. The method includes: obtaining an image to be compressed, and the image to be compressed comprises a target object; determining a plurality of image feature regions in the image to be compressed that match the target object according to a channel value of a pixel in the image to be compressed; obtaining a compression parameter corresponding to each image feature region, and compressing each image feature region according to the compression parameter corresponding to each image feature region to obtain a compressed image region; generating a compressed image according to the compressed image region. Because an embodiment of the present disclosure can determine a plurality of image feature regions in the image to be compressed that match the target object based on the channel value of a pixel in the image to be compressed, and compress the image feature regions by using the compression parameters corresponding to the image feature regions, so as to retain the key information in the image feature regions, thereby improving the clarity of the compressed images.

According to the method described in the above embodiment, the following examples will be further elaborated.

In this embodiment, the image compression device is integrated in a computer device, and the computer equipment could be a server or a terminal.

Conventionally, the way of compressing an image is generally to compress the image as a whole, but such overall compression mode easily loses the key information in the image, resulting in a blurry compressed image. Based on this, the embodiment of the present disclosure provides an image compression method to improve the clarity of the compressed image and the accuracy of the compression. As shown in FIG. 2, and the specific flow of the image compression method is as in step S101 to step S104:

S101: obtaining an image to be compressed.

The image to be compressed includes the target object. In this embodiment, the image to be compressed is a portrait image as an example. In addition, at least one portrait may be included in the portrait image.

In this embodiment, the image to be compressed may be stored in a database of computer equipment. Based on this, the image to be compressed can be extracted from the database.

In this embodiment, a plurality of candidate images may be stored in the database, and the computer equipment may respond to the selection operation for the candidate image and obtain the image to be compressed from the candidate image.

The candidate images can be displayed on the corresponding display screen of the computer equipment.

S102: determining a plurality of image feature regions in the image to be compressed that match the target object according to a channel value of a pixel in the image to be compressed.

When the image to be compressed is an RGB image, the channel value of a pixel in the image to be compressed can include R value, G value, and B value. When the image to be compressed is an RGBA image, the channel value of the pixel in the image to be compressed can include R value, G value, B value, and A value. The format of the image to be compressed is not limited to RGB format and RGBA format, but also YUV format, and so on.

The image to be compressed is an RGBA image as an example.

In this embodiment, the image data of the image to be compressed can be obtained. The image data is a one-dimensional array, and the image data represents the data of each pixel with the values of four channels: R value, G value, B value and A value. The size of the image data to be compressed is width*height*4, where "width" refers to the width of the image to be compressed, and "height" refers to the height of the image to be compressed.

In this embodiment, the image data corresponding to the pixels in the image to be compressed are sequentially stored from left to right and from top to bottom.

In this embodiment, the data from the image to be compressed can be extracted through an image processing application, such as Canvas, to obtain the image data of the image to be compressed. Specifically, the image data of the image to be compressed can be extracted through the image data interface of Canvas.

In this embodiment, there can be a plurality of image feature regions. Here, the image feature region has three image feature regions as an example. For example, a plurality of image feature regions includes a first image feature region, a second image feature region, and a third image feature region.

As shown in FIG. 3, the step of determining a plurality of image feature regions in the image to be compressed that match the target object according to a channel value of a pixel in the image to be compressed could comprise steps A1-A3: A1: performing a boundary recognition on the target object according to the channel value of the pixel in the image to be compressed, so as to determine the first image feature region from the image to be compressed.

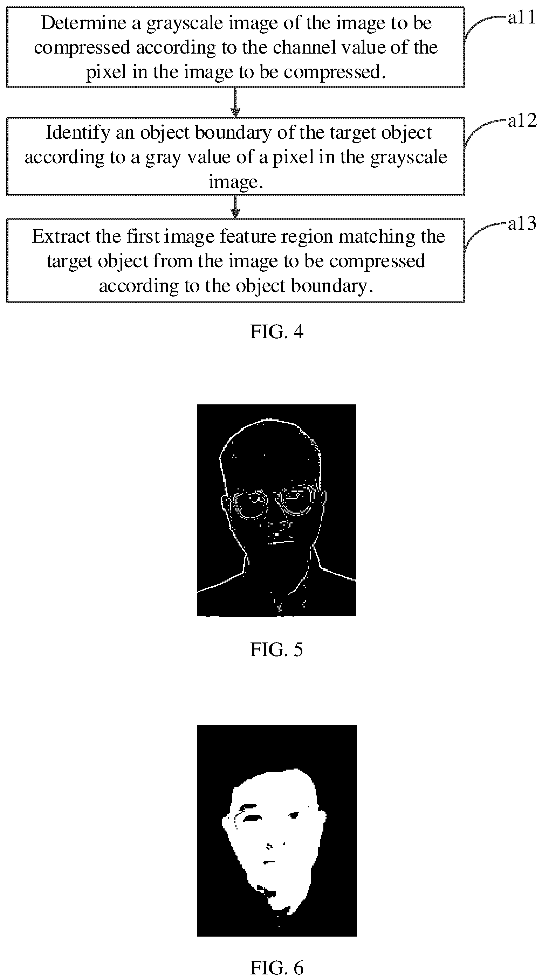

As shown in Figure 4, the embodiment of the present disclosure performs boundary identification on the target object according to the channel value of the pixel in the image to be compressed, so that the first image feature region can be determined from the image to be compressed in a manner such as step a11 to step a13: a11: determining a grayscale image of the image to be compressed according to the channel value of the pixel in the image to be compressed.

It is understood that the embodiment of the present disclosure can convert the image to be compressed into a grayscale image based on the channel value of the pixel in the image to be compressed. Specifically, in this embodiment, the step of determining the grayscale image of the image to be compressed according to the channel value of the pixel in the image to be compressed comprises: determining a pixel type of the pixel in the image to be compressed; determining a grayscale computing strategy corresponding to the pixel according to the pixel type; using the grayscale computing strategy to calculate candidate gray values of the pixels according to the channel value of the pixel; and generating the grayscale image of the image to be compressed according to the candidate grayscale value.

Pixel types can include both an edged pixel type and a non-edged pixel type. The edge pixel type can refer to the pixel type of the pixel at the edge of the image to be compressed. The non-edged pixel type can refer to a pixel type of the pixel that is not at the edge of the image to be compressed. When there are adjacent pixels in the four positions of the pixel, the pixel can be determined to be not at the edge of the image to be compressed. When there are no adjacent pixels in at least one of the four positions of the pixel, the pixel can be determined to be at the edge of the image to be compressed.

The grayscale computing strategy can refer to a strategy that converts an image to be compressed into a grayscale image.

The step of determining the pixel type of the pixel in the image to be compressed could comprise: determining the position of the pixel in the image to be compressed; and determining the pixel type of the pixel according to the position of the pixel.

The embodiment of the present disclosure can obtain a target coordinate system of the pixel in the image to be compressed; determine a coordinate of each pixel in the image to be compressed based on the target coordinate system to determine the position of the pixel in the image to be compressed based on the coordinate.

When the position of the pixel is the edge position of the image to be compressed, the pixel type of the pixel is determined to be the edged type. When the position of the pixel is not the edge position of the image to be compressed, the pixel type of the pixel is determined to be the non-edged type.

In some embodiments, the grayscale calculation strategy comprises a first grayscale calculation strategy and a second grayscale calculation strategy. The step of using the grayscale computing strategy to calculate candidate gray values of the pixels according to the channel value of the pixel comprises: obtaining the pixel type of the pixel in the image to be compressed; when the pixel type is an edge pixel type, using the first grayscale calculation strategy to calculate the candidate gray value of the pixel according to the channel value of the pixel; and when the pixel type is not an edge pixel type, using the second grayscale calculation strategy to calculate the candidate gray value of the pixel according to the channel value of the pixel.

In another embodiment, the step of obtaining the pixel type of the pixel in the image to be compressed is similar and thus related process is omitted here.

In another embodiment, the step of obtaining the pixel type of the pixel in the image to be compressed can be as follows: using the pixel type recognition neural network model to identify the pixel type of the pixel in the image to be compressed to obtain the pixel type of the pixel in the image to be compressed. The pixel type recognition neural network model can be a convolutional neural network model or a self-attention neural network model.

In another embodiment, the step of obtaining the pixel type of the pixel in the image to be compressed can be: obtaining a pixel value of the pixel in the image to be compressed; and determine the pixel type of the pixel in the image to be compressed based on the pixel value.

The step of determining the pixel type of the pixel in the image to be compressed based on the pixel value could include: determining a preset pixel value range in which the pixel value is located; according to the preset pixel value range, finding the preset pixel type corresponding to the preset pixel value range; setting the preset pixel type as the pixel type of the pixel in the image to be compressed.

Based on the above, the step of using the first grayscale calculation strategy to calculate the candidate gray value of the pixel according to the channel value of the pixel can comprise: performing a calculation on the channel value of the pixel by using the first gray scale calculation strategy to obtain a first calculated channel value; and determining the candidate gray value of the pixel according to the first calculated channel value.

Specifically, the first grayscale calculation strategy can be referred to the below equation (1):

$$F1(input, \ p) = 0.2126 * input[p1] + 0.7152 * input[p2] + 0.0722 * input[p3] \quad \text{Equation (1)}$$

where *input* can refer to the image data of the image to be compressed; *p* can refer to the order of the p$^{th}$ pixel in the image data; *p*1 may refer to the order of the p$^{th}$ pixel in the R-channel value in the image data. In this embodiment, *p*1 may be equal to . *p*2 may refer to the order of the p$^{th}$ pixel in the G-channel value in the image data. *p*2 = *p*1+1. *p*3 may refer to the order of the p$^{th}$ pixel in the B-channel value in the image data. *p*3 = *p*1+ 2. *F*1(input, *p*) can refer to the candidate gray value of the p$^{th}$ pixel obtained by the first gray scale calculation strategy; where *p* is an integer.

The embodiment of the present disclosure can calculate the candidate gray value of the pixel.

In an embodiment, the step of using the second grayscale calculation strategy to calculate the candidate gray value of the pixel according to the channel value of the pixel can comprise: performing a calculation on the channel value of the pixel by using the second gray scale calculation strategy to obtain a second calculated channel value; and determining the candidate gray value of the pixel according to the second calculated channel value.

Specifically, the second grayscale calculation strategy can be referred to the below equation (2):

F2=F1(*input, p*) * 4 -F1(*input, p-w*)-F1(*input, p-*1)- F1(*input, p+*1)-F1(*input, p+w*)

where F2 refers to the candidate gray value of the pixel obtained by the second grayscale calculation strategy, and w represents the width of the image to be compressed, which is the number w of pixels in a row of pixels in the image to be compressed. Please note that the a row of pixels in the image to be compressed actually occupy a width *w * 4* in the image data. P can refer to the order of the p$^{th}$ pixel in the image data. *p - w* can refer to the order of a pixel corresponding to the p$^{th}$ pixel in the same position in the previous row. *p + w* can refer to the order of a pixel corresponding to the p$^{th}$ pixel in the same position on the next row. *p -* 1 can refer to the order of a pixel on the left of the p$^{th}$ pixel. *p +* 1 can refer to the order of a pixel on the right of the p$^{th}$ pixel.

In another embodiment, the step of generating the grayscale image of the image to be compressed according to the candidate grayscale value can comprise: obtaining a preset grayscale threshold; according to the preset grayscale threshold and the candidate gray value, determining the gray value; and based on the gray value, generating a grayscale image of the image to be compressed. The gray value includes a first gray value and a second gray value. The first gray value can be 255, and the second gray value can be 0. The preset grayscale threshold can be 30.

When the candidate gray value is greater than or equal to the preset grayscale threshold, the candidate gray value of the pixel is determined as the first gray value. When the candidate grayscale value is less than the preset gray threshold, the candidate gray value of the pixel is determined as the second gray value.

The grayscale computing strategies can also include Sobel edge detection operators and Canny edge detection operators.

a12: identifying an object boundary of the target object according to a gray value of a pixel in the grayscale image.

In an embodiment, the step of identifying the object boundary of the target object according to the gray value of the pixel in the grayscale image can comprise: determining a target pixel having a target gray value in the gray image according to the gray value of the pixel; and determining the object boundary of the target object in the image to be compressed according to the target pixel.

The target gray value can be 255. That is, the target pixel having the target gray value is a white pixel. In this embodiment, the object boundary of the target object is determined based on the white pixels.

In some embodiments, the step of determining the target pixel having the target gray value in the gray image according to the gray value of the pixel can comprise: obtaining coordinates of the grayscale image in a target coordinate system; extracting a number of candidate pixels having the target gray value under the coordinates according to the gray values of the pixel in the gray image; and determining the target pixel having the target gray value in the gray image according to the number of the candidate pixels.

An embodiment of the present disclosure can establish a target coordinate system for a grayscale image. Each pixel in the grayscale image has a corresponding coordinate in the target coordinate system. The upper left corner of the grayscale image is the coordinate origin of the target coordinate system, where the right part of the x-axis represents positive values and lower part of the y-axis represents positive values.

The target coordinate system can be a rectangular coordinate system. The target coordinate system can include the x-axis and the y-axis, and the coordinates in the target coordinate system can include the coordinates at x=n and y=n, where n is an integer.

The candidate pixel can refer to a white pixel. Based on this, the step of extracting a number of candidate pixels having the target gray value under the coordinates according to the gray values of the pixel in the gray image can comprise: getting the number of white pixels contained in the x-axis at the coordinates x=n and the distribution relationship between the coordinates of the x-axis and the number of white pixels; and getting the number of white pixels contained in the y-axis at the coordinates y=n and the distribution relationship between the coordinates of the y-axis and the number of the white pixels.

In some embodiments, the step of determining the target pixel having the target gray value in the gray image according to the gray value of the pixel can comprise: determining a target coordinate corresponding the candidate pixels having a target number from the coordinates according to the number of the candidate pixels; and extracting the target pixel satisfying a preset number ratio from the candidate pixels according to the target coordinates, so as to obtain the target pixel having the target gray value in the gray image.

Specifically, the target coordinate can be the coordinate that has the most white pixels out of all the coordinates. For example, for the x-axis, the target coordinate is the coordinate with the most white pixels in the x-axis. For example, when x=1, the number of white pixels is 5. When x=2, the number of white pixels is 7. When x=3, the number of white pixels is 15. This is just an example. In this example, for the x-axis, the number of white pixels is the largest at x=3, so x=3 can be used as the target coordinate.

Similarly, for the y-axis, the target coordinate is the coordinates with the most white pixels in the y-axis.

The preset number ratio can be the proportion of 5/6 of the total number of white pixels. For the x-axis, the preset number ratio is the proportion of 5/6 of the total number of white pixels corresponding to all coordinates of the x-axis. For the y-axis, the preset number ratio is the proportion of 5/6 of the total number of white pixels corresponding to all coordinates on the y-axis.

Specifically, in this embodiment, for the x-axis, the calculation starts from the target coordinate and stops when the number of white pixels reaches 5/6 of the total number of white pixels corresponding to all coordinates on the x-axis. At this time, it can be determined that the first image feature region is located in one or more segments of the coordinate range on the x-axis. For the y-axis, the calculation starts from the target coordinate and stops when the number of white pixels reaches 5/6 of the total number of white pixels corresponding to all coordinates on the y-axis. At this time, it can be determined that the first image feature region is located in one or more segments of the coordinate range on the y-axis.

The object boundary is constructed based on one or more segments of the coordinate range of the first image feature region on the y-axis and one or more segments of the first image feature region on the x-axis determined above.

Based on the above, the object boundary is shown by the white pixels in the grayscale image in FIG. 5.

a13: extracting the first image feature region matching the target object from the image to be compressed according to the object boundary.

Based on the above, an embodiment of the present disclosure extracts the region inside the object boundary based on the image to be compressed to get the first image feature region.

A2: performing a feature recognition on the target object according to the channel value of the pixel in the first image feature region, so as to extract the second image feature region from the first image feature region.

In an embodiment, the step of performing the feature recognition on the target object according to the channel value of the pixel in the first image feature region, so as to extract the second image feature region from the first image feature region can comprise: determining a regional feature value of the pixel in the first image feature region according to the channel value of the pixel in the first image feature region; determining the target pixel value of the pixel according to a target channel value of the pixel in the first feature region and the first image feature region; and extracting a second image feature region matching the target object from the first image feature region according to the target pixel value.

The regional feature value can be a value used to determine whether a pixel belongs to a second image feature region.

Because the first image feature region is in RGBA format, in order to extract the second image feature region, in this embodiment, the format of the first image feature region needs to be converted. Here, the first image feature region is first converted into RGB format and then converted from RBG format into YCrCb format.

First, an embodiment of the present disclosure obtains a white background picture. The format of the white background picture is in RGB format, where the R channel value bgR of the white background picture is 255, the G channel value bgG of the white background picture is 255, and the B channel value bgB of the white background picture is 255. Then, an embodiment of the present disclosure divides the A channel value in the first image feature region in the RGBA format by 255 to convert the A channel value of the first image feature region in the RGBA format into a value between 0 and 1 to obtain the converted A channel value sourceA. In addition, the embodiment of the present disclosure denotes the R channel value of the first image feature region in the RGBA format as sourceR, the G channel value of the first image feature region in the RGBA format as sourceG, and the B channel value of the first image feature region in the RGBA format as sourceB.

And then, the embodiment of the present disclosure converts the first image feature region in the RGBA format into the RGB format by the below equations (3)-(5):

$$t \arg etR = sourceA * sourceR + (1 - sourceA) * bgR \qquad \text{Equation (3)}$$

$$t \arg etG = sourceA * sourceG + (1 - sourceA) * bgG \qquad \text{Equation (4)}$$

$$t \arg etB = sourceA * sourceB + (1 - sourceA) * bgB \qquad \text{Equation (5)}$$

where *targetR* can refer to the R channel value in the first image feature region in the RGB format. *targetG* can refer to the G channel value in the first image feature region in the RGB format *targetB* can refer to the B channel value in the first image feature region in the RGB format.

Then, the embodiment of the present disclosure converts the first image feature region from the RGB format into the YCrCb format according to the below equations (6)-(8):

$$Y = 0.257t \arg etR + 0.504t \arg etG + 0.098t \arg etB + 16 \qquad \text{Equation (6)}$$

$$Cb = -0.148t \arg etR - 0.291t \arg etG + 0.439t \arg etB + 128 \qquad \text{Equation (7)}$$

$$Cr = 0.439t \arg etR - 0.368t \arg etG - 0.071t \arg etB + 128 \qquad \text{Equation (8)}$$

where *Y* refers to the Y channel value in the first image feature region in the YCbCr format, *Cb* refers to the Cb channel value in the first image feature region in the YCbCr format, *Cr* refers to the Cr channel value in the first image feature region in the YCbCr format.

Based on the above, in another embodiment, the step of determining the regional feature value of the pixel in the first image feature region according to the channel value of the pixel in the first image feature region can comprise: performing a fusing operation on a candidate channel value in the channel value of the pixel in the first image feature region to obtain a fused channel value; and determining the regional feature value of the pixel in the first image feature region according to the fused channel value.

The embodiment of the present disclosure may perform a fusion operation on the candidate channel value of the pixel in the first image feature region in the YCbCr format. The candidate channel values can include the Cb channel value and the Cr channel value.

The candidate channel value comprises a first candidate channel value and a second candidate channel value. Based on this, the step of performing the fusing operation on the candidate channel value in the channel value of the pixel in the first image feature region to obtain a fused channel value can comprise: using a first fusion function to perform a fusing operation on the first candidate channel value and the second candidate channel value to obtain a first initial fused channel value; using a second fusion function to perform a fusing operation on the first candidate channel value and the second candidate channel value to obtain a second initial fused channel value; and using a third fusion function to perform a fusing operation on the first initial fused channel value and the second initial fused channel value to obtain the fused channel value..

Here, the first candidate channel value is the *Cb* channel value, and the second candidate channel value is the *Cr* channel value.

Based on the above, the first fusion operation can be performed according to the below equation (9):

$$x1 = \frac{\left\lceil \dfrac{819*(Cr-152)-614*(Cb-109)}{32}+51 \right\rceil *41}{1024} \qquad \text{Equation (9)}$$

where $x1$ can refer to the first initial fused channel value.

Based on the above, the second fusion operation can be performed according to the below equation (10):

$$y1 = \frac{\left\lceil \dfrac{819*(Cr-152)+614*(Cb-109)}{32}+77 \right\rceil *73}{1024}$$

$$\text{Equation (10)}$$

where $y1$ can refer to the second initial fused channel value.

Based on the above, the third fusion operation can be performed according to the below equation (11):

$$val = x1*x1 + y1*y1 \qquad \text{Equation (11)}$$

where *val* can refer to the fused channel value. In some embodiments, the fused channel value can be used as the regional feature value of the pixel in the first image feature region.

The step of determining a regional feature value of the pixel in the first image feature region according to the channel value of the pixel in the first image feature region can comprise: obtaining a mapping function; performing a mapping operation on the fused channel value according to the mapping function to obtain the regional feature value of the pixel in the first image feature region.

The target pixel value comprises a first target pixel value and a second target pixel value; and the step of determining the target pixel value of the pixel according to the target channel value of the pixel in the first feature region and the first image feature region can comprise: when the target channel value of the pixel in the first image feature region is less than a channel value threshold and when the regional feature value is less than a first feature value threshold, determining the target pixel value of the pixel to be the first target pixel value; and when the target channel value of the pixel in the first image feature region is less than the channel value threshold and when the feature value of the region is greater than or equal to the first feature value threshold, determining the target pixel value of the pixel to be the second target pixel value.

The target channel value can refer to the y channel value of the pixel in the first image feature region in the YCbCr format.

The channel value threshold can be 100. The first feature value threshold can be 700. The first target pixel value can be 255. The second target pixel value is 0.

Since the image to be compressed in this embodiment is a portrait image, the first image feature region may be the region of the portrait in the image to be compressed, and the second image feature region may be the face region, the human eye region and the human ear region in the portrait, etc. In the following disclosure, the second image feature region is a face region as an example.

When the target channel value of the pixel in the first image feature region is less than the channel value threshold and the regional feature value is less than the first feature value threshold, it indicates that the pixel falls in the elliptical region. That is, the pixel is a pixel falling in the face region. Based on this, the target pixel value of the pixel is determined to be 255. When the target channel value of the pixel in the first image feature region is less than the threshold of the channel value, and the region feature value is greater than or equal to the threshold of the first feature value, it indicates that the pixel does not fall in the elliptical region. That is, the pixel does not fall in the face region. Based on this, the target pixel value of the pixel is determined to be 0.

In an embodiment, the target pixel value comprises a first target pixel value and a second target pixel value. The step of determining the target pixel value of the pixel according to the target channel value of the pixel in the first feature region and the first image feature region can comprise: when the target channel value of the pixel in the first image feature region is greater than or equal to a channel value threshold and when the regional feature value is less than a second feature value threshold, determining the target pixel value of the pixel to be the first target pixel value; and when the target channel value of the pixel in the first image feature region is greater than or equal to the channel value threshold and when the regional feature value is greater than or equal to the second feature value threshold, determining the target pixel value of the pixel to be the second target pixel value.

The second feature value threshold can be 850. If the target channel value of the pixel in the first image feature region is greater than or equal to the threshold of the channel value, and the region feature value is less than the second feature value threshold, it indicates that the pixel falls in the elliptical region. Based on this, the target pixel value of the pixel is determined to be 255. When the target channel value of a pixel in the first image feature region is greater than or equal to the channel value threshold, and the regional feature value is greater than or equal to the second feature value threshold, it indicates that the pixel does not fall in the elliptical region. Based on this, the target pixel value of the pixel is determined to be 0.

Based on the above, the embodiment of the present disclosure can convert the first image feature region into a binary image. That is, the embodiment of the present disclosure can convert the first image feature region into a binary image according to the target pixel value. The binary image is shown in FIG. 6. That is, the extracting a second image feature region matching the target object from the first image feature region according to the target pixel value can comprise: converting the first image feature region into a binary image according to the target pixel value; and extracting a second image feature region that matches the target object from the binary image.

Specifically, the step of extracting the second image feature region matching the target object from the binary image can comprise: based on the binary image, using the upper left corner vertex of the binary image as the coordinate origin to construct a candidate rectangular coordinate system; obtaining the candidate coordinate of the binary image in the candidate rectangular coordinate system; according to the target pixel value of the pixel in the binary image, obtaining a number of pixels having the first target pixel value under the candidate coordinates; determining feature pixels in the binary image according to the number of pixels corresponding to the first target pixel value; according to the feature pixels, constructing a second image feature region matching the target object.

The feature pixel can refer to a pixel that constructs the second image feature region.

In a rectangular coordinate system, the right part of x-axis represents positive values, and the lower part of the y-axis represents positive values. The candidate coordinate can include a candidate coordinate at x=n and y=n, where n is an integer.

The pixel having the first target pixel value may be a white pixel. Based on this, the step of obtaining a number of pixels having the first target pixel value under the candidate coordinates according to the target pixel value of the pixel in the binary image can comprise: calculating a number of white pixels having the candidate coordinate x=n, and obtaining a distribution relationship between the candidate coordinates of the x-axis and the number of white pixels; and calculating a number of white pixels having the candidate coordinate y=n, and obtaining a distribution relationship between the candidate coordinates of the y-axis and the number of white pixels.

Due to the continuousness of the face region of the human face and in order to reduce the influence of noise on the extraction of the second feature region, the step of determining the feature pixel in the binary image according to the number of the pixels having the first target value can comprise: determining the reference coordinates corresponding to a preset number of pixels from the candidate coordinates according to the pixels corresponding to the first target pixel value; and according to the reference coordinates, extracting the feature pixel from the pixels corresponding to the first target pixel value.

In an embodiment, the step of determining the reference coordinates corresponding to a preset number of pixels from the candidate coordinates can comprise: for the x-axis, taking the first and the last reference coordinates having more than 10 white pixels as the reference coordinates so that the coordinate range of the second image feature region on the x-axis can be determined; for the y-axis, taking the first and the last reference coordinates having more than 10 white pixels as the reference coordinates so that the coordinate range of the second image feature region on the y-axis can be determined.

The embodiment of the present application determines the position of the feature pixels in the binary image based on the coordinate range of the second image feature region on the x-axis and the y-axis.

The step of extracting the second image feature region can accomplished by a combination of YCrCb color space Cr component and the Otsu method threshold segmentation method or can be based on YCrCb color space C and Cb range screening method, HSV color space H range screening method, etc.

A3: determining a third image feature region from the image to be compressed according to the first image feature region.

The third the image feature region does not contain the target object.

In this embodiment, after the first image feature region is extracted from the image to be compressed, the remaining part in the image to be compressed is the initial third image feature region. Because after extracting the first image feature region from the compressed image, a part of the initial third image feature region does not include any pixels. Thus, in an embodiment, the part of the region that does not include any pixels can be filled with transparent pixels, so that a third image feature region can be obtained.

In addition, the embodiment of the present disclosure may also use an existing relevant neural network model to identify a plurality of image feature regions matching the target object in the image to be compressed according to the channel value of the pixel in the image to be compressed. The neural network model can be an object boundary recognition model. Specifically, the neural network model can be a CNN model or a self-attention neural network model, etc.

When a plurality of portraits are included in the image to be compressed, the embodiment of the present disclosure may extract the first image feature region corresponding to the plurality of portraits according to the above-mentioned steps a11-a13; Then, for the first image feature region, the second image feature region corresponding to each portrait is extracted from the first image feature region according to the above-mentioned step A2.

When a plurality of portraits are included in the image to be compressed, the embodiment of the present disclosure can identify different portraits through a portrait recognition neural network model, and then perform feature extraction on different portraits to obtain the first image feature region corresponding to each portrait. Furthermore, the embodiment of the application may separately perform face recognition in the first image feature region corresponding to each portrait to obtain the second image feature region corresponding to each portrait from the first image feature region corresponding to each portrait.

When a portrait and an object are included in the image to be compressed, the embodiment of the present disclosure can identify the portrait through a portrait recognition neural network model and extract the first image feature region corresponding to the portrait and can recognize the object through the object recognition neural network model such that the first image feature region corresponding to the portrait and the object can be extracted. And then, the second the second feature region from the first feature region according to the above step A2.

When a portrait and an object are included in the image to be compressed, the embodiment of the present disclosure may extract a corresponding first image feature region according to the steps a11-a13 (where the first image feature region is the feature region of the portrait and the object), and then extract the second image feature region corresponding to the portrait from the first image feature region according to step A2.

S103: obtaining a compression parameter corresponding to each image feature region, and compressing each image feature region according to the compression parameter corresponding to each image feature region to obtain a compressed image region.

The compression parameter can be a compression ratio. Each image feature region has a corresponding compression parameter. The embodiment of the present disclosure may compress each image feature region separately based on the compression parameter corresponding to each image feature region to obtain a compressed image region corresponding to each image feature region.

The embodiment of the present disclosure can determine the importance degree of each image feature region, and rank the image feature regions according to the importance degree of each image feature region. The step of ranking the image feature regions can be: second image feature region is more important than the first image feature region, and the first image feature region is more important than the third image feature region. Based on this, the embodiment of the present disclosure can compress each image feature region to different degrees by using different compression ratios according to the importance degree.

In the embodiment of the present disclosure, the compression ratio of the second image feature region is greater than that of the first image feature region, and the compression ratio of the first image feature region is greater than that of the third image feature region.

The compression ratio of the second image feature region can be greater than 0.8, and the compression ratio of the first image feature region and the third image feature region can be greater than 0.6.

The compression ratio of the second image feature region can be 0.8, the compression ratio of the first image feature region can be 0.6, and the compression ratio of the third image feature region can be 0.5.

The embodiment of the application can compress each image feature region through an image compression interface in Canvas. For example, the to Blob API compress each image feature region according to the compression parameter corresponding to each image feature region to obtain a compressed image region.

S104: generating a compressed image according to the compressed image region.

The step 104 of generating a compressed image according to the compressed image region can comprise: obtaining an initial coordinate of the image feature region in a target coordinate system; according to the initial coordinate point, merging a compressed image region corresponding to the image feature region to obtain a merged image; and determining the compressed image according to the merged image.

In this embodiment, when the image to be compressed is in Canvas, it has a corresponding target coordinate system. Each pixel of the image to be compressed has a corresponding initial coordinate point in the target coordinate system. Based on this, when extracting the image feature region, the embodiment of the present disclosure can label the initial coordinate point corresponding to each image feature region in the image to be compressed. The size of the compressed image region remains unchanged. Based on this, the embodiment of the present disclosure can stitch the compressed image regions corresponding to the image feature region based on the initial coordinate point to obtain the merged image.

The merged image is the compressed image.

The compressed image can be in image/jpeg or image/webp format.

The compressed image can be output through an image conversion interface, where the image conversion interface can be window.URL.create Object URL(blob). The image conversion interface is an interface that converts image data into an image.

The embodiments of the present disclosure provide an image compression method. The method includes: obtaining an image to be compressed, and the image to be compressed comprises a target object; determining a plurality of image feature regions in the image to be compressed that match the target object according to a channel value of a pixel in the image to be compressed; obtaining a compression parameter corresponding to each image feature region, and compressing each image feature region according to the compression parameter corresponding to each image feature region to obtain a compressed image region; generating a compressed image according to the compressed image region. Because an embodiment of the present disclosure can determine a plurality of image feature regions in the image to be compressed that match the target object based on the channel value of a pixel in the image to be compressed, and compress the image feature regions by using the compression parameters corresponding to the image feature regions, so as to retain the key information in the image feature regions, thereby improving the clarity of the compressed images.

In order to better implement the above method, the embodiment of the present disclosure also provides an image compression device, which can be integrated into a computer device, such as a server or a terminal, and the terminal may include a tablet computer, a laptop computer, and/or a personal computer, etc.

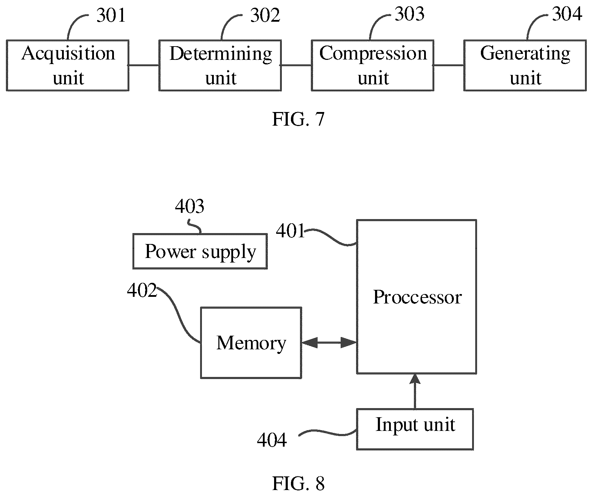

For example, as shown in FIG. 7, the image compression device comprises an acquisition unit 301, a determining unit 302, a compression unit 303 and a generation unit 304.

(1) Acquisition unit 301

The acquisition unit 301 is configured to obtain an image to be compressed, and the image to be compressed comprises a target object.

(2) Determining unit 302

The determining unit 302 is configured to determine a plurality of image feature regions in the image to be compressed that match the target object according to a channel value of a pixel in the image to be compressed.

In some embodiments, the plurality of image feature regions comprise a first image feature region, a second image feature region and a third image feature region. The determining unit is configured to perform a boundary recognition on the target object according to the channel value of the pixel in the image to be compressed, so as to determine the first image feature region from the image to be compressed. The determining unit 302 is configured to perform a feature recognition on the target object according to the channel value of the pixel in the first image feature region, so as to extract the second image feature region from the first image feature region. The determining unit 302 is configured to determine a third image feature region from the image to be compressed according to the first image feature region, where the third image feature region does not contain the target object.

In some embodiments, the determining unit 302 is configured to determine a grayscale image of the image to be compressed according to the channel value of the pixel in the image to be compressed, to identify an object boundary of the target object according to a gray value of a pixel in the grayscale image, and to extract the first image feature region matching the target object from the image to be compressed according to the object boundary.

In some embodiments, the determining unit 302 is configured to determine a pixel type of the pixel in the image to be compressed, to determine a grayscale computing strategy corresponding to the pixel according to the pixel type, to use the grayscale computing strategy to calculate candidate gray values of the pixels according to the channel value of the pixel, and to generate the grayscale image of the image to be compressed according to the candidate grayscale value.

In some embodiments, the determining unit 302 is configured to determine the position of the pixel in the image to be compressed, and to determine the pixel type of the pixel according to the position of the pixel.

In some embodiments, the grayscale calculation strategy comprises a first grayscale calculation strategy and a second grayscale calculation strategy. The determining unit 302 is configured to obtain the pixel type of the pixel in the image to be compressed; when the pixel type is an edge pixel type, the determining unit 302 is configured to use the first grayscale calculation strategy to calculate the candidate gray value of the pixel according to the channel value of the pixel.

When the pixel type is not an edge pixel type, the determining unit 302 is configured to use the second grayscale calculation strategy to calculate the candidate gray value of the pixel according to the channel value of the pixel.

In some embodiments, the determining unit 302 is configured to perform a calculation on the channel value of the pixel by using the first gray scale calculation strategy to obtain a first calculated channel value, and to determine the candidate gray value of the pixel according to the first calculated channel value.

In some embodiments, the determining unit 302 is configured to perform a calculation on the channel value of the pixel by using the second gray scale calculation strategy to obtain a second calculated channel value, and to determine the candidate gray value of the pixel according to the second calculated channel value.

In some embodiments, the determining unit 302 is configured to determine a target pixel having a target gray value in the gray image according to the gray value of the pixel, and to determine the object boundary of the target object in the image to be compressed according to the target pixel.

In some embodiments, the determining unit 302 is configured to obtain coordinates of the grayscale image in a target coordinate system, to extract a number of candidate pixels having the target gray value under the coordinates according to the gray values of the pixel in the gray image, and to determine the target pixel having the target gray value in the gray image according to the number of the candidate pixels.

In some embodiments, the determining unit 302 is configured to determine a target coordinate corresponding the candidate pixels having a target number from the coordinates according to the number of the candidate pixels, and to extract the target pixel satisfying a preset number ratio from the candidate pixels according to the target coordinates, so as to obtain the target pixel having the target gray value in the gray image.

In some embodiments, the determining unit 302 is configured to determine a regional feature value of the pixel in the first image feature region according to the channel value of the pixel in the first image feature region, to determine the target pixel value of the pixel according to a target channel value of the pixel in the first feature region and the first image feature region, and to extract a second image feature region matching the target object from the first image feature region according to the target pixel value.

In some embodiments, the determining unit 302 is configured to perform a fusing operation on a candidate channel value in the channel value of the pixel in the first image feature region to obtain a fused channel value, and to determine the regional feature value of the pixel in the first image feature region according to the fused channel value.

In some embodiments, the candidate channel value comprises a first candidate channel value and a second candidate channel value. The determining unit 302 is configured to use a first fusion function to perform a fusing operation on the first candidate channel value and the second candidate channel value to obtain a first initial fused channel value. The determining unit 302 is configured to use a second fusion function to perform a fusing operation on the first candidate channel value and the second candidate channel value to obtain a second initial fused channel value. The determining unit 302 is configured to use a third fusion function to perform a fusing operation on the first initial fused channel value and the second initial fused channel value to obtain the fused channel value.

In some embodiments, the target pixel value comprises a first target pixel value and a second target pixel value. when the target channel value of the pixel in the first image feature region is less than a channel value threshold and when the regional feature value is less than a first feature value threshold, the determining unit 302 is configured to determine the target pixel value of the pixel to be the first target pixel value. When the target channel value of the pixel in the first image feature region is less than the channel value threshold and when the feature value of the region is greater than or equal to the first feature value threshold, the determining unit 302 is configured to determine the target pixel value of the pixel to be the second target pixel value.

In some embodiments, the target pixel value comprises a first target pixel value and a second target pixel value. When the target channel value of the pixel in the first image feature region is greater than or equal to a channel value threshold and when the regional feature value is less than a second feature value threshold, the determining unit 302 is configured to determine the target pixel value of the pixel to be the first target pixel value. When the target channel value of the pixel in the first image feature region is greater than or equal to the channel value threshold and when the regional feature value is greater than or equal to the second feature value threshold, the determining unit 302 is configured to determine the target pixel value of the pixel to be the second target pixel value.

(3) Compression unit 303

The compression unit 303 is configured to obtain a compression parameter corresponding to each image feature region, and compress each image feature region according to the compression parameter corresponding to each image feature region to obtain a compressed image region.

(4) Generating unit 304

The generating unit 304 is configured to generate a compressed image according to the compressed image

# EP 4 589 534 A1

region.

In some embodiments, the generating unit 304 is configured to obtain the initial coordinate point of the image feature region in the target coordinate system. According to the initial coordinate point, the compressed image area corresponding to the image feature area is merged to obtain the merged image. Based on the merged image, the compressed image is determined.

From the above, it can be seen that the acquisition unit 301 obtain an image to be compressed, and the image to be compressed comprises a target object; the determining unit 302 can be used to determine a plurality of image feature regions in the image to be compressed that match the target object according to a channel value of a pixel in the image to be compressed; the compression unit 303 can be used to obtain a compression parameter corresponding to each image feature region, and compress each image feature region according to the compression parameter corresponding to each image feature region to obtain a compressed image region; The generating unit 304 can be used to generate a compressed image according to the compressed image region. Because the embodiment of the present disclosure can determine a plurality of image feature regions in the image to be compressed that match the target object based on the channel values of the pixels in the image to be compressed, and compress the image feature regions by using the compression parameters corresponding to the image feature regions, so as to retain the key information in the image feature regions, thereby improving the clarity of the compressed images.

Refer to FIG. 8 illustrating a schematic diagram of a computing device according to another embodiment of the present disclosure. The embodiment of the present disclosure also provides a computing device.

The computing device may comprise components such as a processor 401 for one or more processing cores, a memory 402 for one or more computer-readable storage media, a power supply 403 and an input unit 404. Those skilled in the art can understand that the structure of the computing device shown in FIG. 8 does not constitute a limitation of the computing device, and may include more or fewer parts than illustrated, or combine certain parts, or arrange different parts.

The processor 401 is the control center of the computing device, which uses various interfaces and lines to connect the various parts of the entire computing device by running or executing software programs stored in memory 402 and/ or modules, as well as calling up the data stored in memory 402, performing various functions and processing data of the computing device, so as to carry out overall monitoring of the computing device. Optionally, the processor 401 may include one or more processing cores. Preferably, the processor 401 can integrate an application processor and a modem processor, where the application processor mainly processes the operating system, user interface and application and the like, and the modem processor mainly processes wireless communication. It is understandable that the aforementioned modem processor can also be left unintegrated into the processor 401.

The memory 402 can be used to store software programs and modules, and the processor 401 performs various functional applications and data processing by running software programs and modules stored in memory 402. The memory 402 may mainly include a storage program area and a storage data area, where the storage program area can store the operating system, at least one function required application (such as sound playback function, image playback function, etc.). The storage data area can store data created based on the use of computing devices, etc. In addition, the memory 402 may include high-speed random access memory and may include non-volatile memory, such as at least one disk storage device, flash memory device, or other volatile solid-state memory device. Correspondingly, the memory 402 may also include a memory controller to provide access from the processor 401 to the memory 402.

The computing device also comprises a power supply 403 for supplying power to each component. Preferably, the power supply 403 can be connected with the processor 401 through the power management system, so that the functions such as managing charging, discharging, and power consumption management can be realized through the power management system. The power supply 403 can also include any component such as one or more DC or AC power sources, recharging systems, power fault detection circuits, power converters or inverters, and power status indicators.

The computing device may also include an input unit 404 that can be used to receive input numeric or character information and to generate keyboard, mouse, joystick, optical or trackball signal input related to user settings and function control.

Although not shown, computer equipment may also include display units, etc., which will not be repeated here. Specifically, in this embodiment, the processor 401 in the computer equipment will load the executable file corresponding to the process of one or more computer programs into the memory 402 according to the following instructions, and the processor 401 will run the computer program stored in the memory 402, thereby realizing various functions, as follows: obtaining an image to be compressed, and the image to be compressed comprises a target object; determining a plurality of image feature regions in the image to be compressed that match the target object according to a channel value of a pixel in the image to be compressed; obtaining a compression parameter corresponding to each image feature region, and compressing each image feature region according to the compression parameter corresponding to each image feature region to obtain a compressed image region; generating a compressed image according to the compressed image region..

The specific implementation of each of the above operations can be found in the previous embodiment, which will not be repeated here.

A person skilled in the art may understand that all or part of the steps in the various methods of the above embodiments may be completed by a computer program or by controlling the relevant hardware through a computer program, and the computer program may be stored in a computer-readable storage medium and loaded and executed by a processor.

For this purpose, the embodiment of the present disclosure provides a computer-readable storage medium in which a computer program is stored, and the computer program can be loaded by a processor to perform any image compression method provided in the embodiment of the present disclosure.

The specific implementation of each of the above operations can be found in the previous embodiment, which will not be repeated here.

The computer readable storage medium may include: Read Only Memory (ROM), Random Access Memory (RAM), disk or optical disc, etc.

Because the instruction stored in the computer-readable storage medium can perform the steps in any image compression method provided in the embodiment of the present disclosure, the beneficial effect that any image compression method provided in the embodiment of the present disclosure can be realized, see the previous embodiment for details, and will not be repeated herein.

Pursuant to one aspect of the present disclosure, a computer program product or computer program is provided that comprises computer instructions stored in a computer-readable storage medium. The processor of the computer device reads the computer instruction from a computer-readable storage medium, and the processor executes the computer instruction so that the computer device performs the method provided in the various optional implementations provided in the preceding embodiment.

An image compression method, a device, a computer equipment and a computer-readable storage medium provided by the embodiment of the present disclosure are described in detail above, and the principle and embodiment of the present disclosure are elaborated by applying specific examples in this article, and the description of the above embodiment is only used to help understand the method of the present disclosure and its core idea; At the same time, for those skilled in the art, according to the idea of the present disclosure, there will be changes in the specific embodiment and the scope of application, and in summary, the contents of this specification should not be understood as a restriction on the present disclosure.

## Claims

1. An image compression method, comprising:

   obtaining an image to be compressed, and the image to be compressed comprises a target object;
   determining a plurality of image feature regions in the image to be compressed that match the target object according to a channel value of a pixel in the image to be compressed;
   obtaining a compression parameter corresponding to each image feature region, and compressing each image feature region according to the compression parameter corresponding to each image feature region to obtain a compressed image region; and
   generating a compressed image according to the compressed image region.

2. The method of claim 1, wherein the plurality of image feature regions comprise a first image feature region, a second image feature region and a third image feature region; and the determining the plurality of image feature regions in the image to be compressed that match the target object according to a channel value of a pixel in the image to be compressed comprises:

   performing a boundary recognition on the target object according to the channel value of the pixel in the image to be compressed, so as to determine the first image feature region from the image to be compressed;
   performing a feature recognition on the target object according to the channel value of the pixel in the first image feature region, so as to extract the second image feature region from the first image feature region; and
   determining a third image feature region from the image to be compressed according to the first image feature region, wherein the third image feature region does not contain the target object.

3. The method of claim 2, wherein the step of performing the boundary recognition on the target object according to the channel value of the pixel in the image to be compressed, so as to determine the first image feature region from the image to be compressed comprises:

   determining a grayscale image of the image to be compressed according to the channel value of the pixel in the image to be compressed;

identifying an object boundary of the target object according to a gray value of a pixel in the grayscale image; and

extracting the first image feature region matching the target object from the image to be compressed according to the object boundary.

4. The method of claim 3, wherein the step of determining the grayscale image of the image to be compressed according to the channel value of the pixel in the image to be compressed comprises:

determining a pixel type of the pixel in the image to be compressed;

determining a grayscale computing strategy corresponding to the pixel according to the pixel type;

using the grayscale computing strategy to calculate candidate gray values of the pixels according to the channel value of the pixel; and

generating the grayscale image of the image to be compressed according to the candidate grayscale value.

5. The method of claim 4, wherein the step of determining the pixel type of the pixel in the image to be compressed comprises:

determining the position of the pixel in the image to be compressed; and

determining the pixel type of the pixel according to the position of the pixel.

6. The method of claim 4, wherein the grayscale calculation strategy comprises a first grayscale calculation strategy and a second grayscale calculation strategy; and the step of using the grayscale computing strategy to calculate candidate gray values of the pixels according to the channel value of the pixel comprises:

obtaining the pixel type of the pixel in the image to be compressed;

when the pixel type is an edge pixel type, using the first grayscale calculation strategy to calculate the candidate gray value of the pixel according to the channel value of the pixel; and

when the pixel type is not an edge pixel type, using the second grayscale calculation strategy to calculate the candidate gray value of the pixel according to the channel value of the pixel.

7. The method of claim 6, wherein the step of using the first grayscale calculation strategy to calculate the candidate gray value of the pixel according to the channel value of the pixel comprises:

performing a calculation on the channel value of the pixel by using the first gray scale calculation strategy to obtain a first calculated channel value; and

determining the candidate gray value of the pixel according to the first calculated channel value.

8. The method of claim 6, wherein the step of using the second grayscale calculation strategy to calculate the candidate gray value of the pixel according to the channel value of the pixel comprises:

performing a calculation on the channel value of the pixel by using the second gray scale calculation strategy to obtain a second calculated channel value; and

determining the candidate gray value of the pixel according to the second calculated channel value.

9. The method of claim 3, wherein the step of identifying the object boundary of the target object according to the gray value of the pixel in the grayscale image comprises:

determining a target pixel having a target gray value in the gray image according to the gray value of the pixel; and

determining the object boundary of the target object in the image to be compressed according to the target pixel.

10. The method of claim 9, wherein the step of determining the target pixel having the target gray value in the gray image according to the gray value of the pixel comprises:

obtaining coordinates of the grayscale image in a target coordinate system;

extracting a number of candidate pixels having the target gray value under the coordinates according to the gray values of the pixel in the gray image; and

determining the target pixel having the target gray value in the gray image according to the number of the candidate pixels.

11. The method of claim 10, wherein the step of determining the target pixel having the target gray value in the gray image according to the number of the candidate pixels comprises:

determining a target coordinate corresponding the candidate pixels having a target number from the coordinates according to the number of the candidate pixels; and
extracting the target pixel satisfying a preset number ratio from the candidate pixels according to the target coordinates, so as to obtain the target pixel having the target gray value in the gray image.

12. The method of claim 2, wherein the step of performing the feature recognition on the target object according to the channel value of the pixel in the first image feature region, so as to extract the second image feature region from the first image feature region comprises:

determining a regional feature value of the pixel in the first image feature region according to the channel value of the pixel in the first image feature region;
determining the target pixel value of the pixel according to a target channel value of the pixel in the first feature region and the first image feature region; and
extracting a second image feature region matching the target object from the first image feature region according to the target pixel value.

13. The method of claim 12, wherein the step of determining the regional feature value of the pixel in the first image feature region according to the channel value of the pixel in the first image feature region comprises:

performing a fusing operation on a candidate channel value in the channel value of the pixel in the first image feature region to obtain a fused channel value; and
determining the regional feature value of the pixel in the first image feature region according to the fused channel value.

14. The method of claim 13, wherein the candidate channel value comprises a first candidate channel value and a second candidate channel value; and the step of performing the fusing operation on the candidate channel value in the channel value of the pixel in the first image feature region to obtain a fused channel value comprises:

using a first fusion function to perform a fusing operation on the first candidate channel value and the second candidate channel value to obtain a first initial fused channel value;
using a second fusion function to perform a fusing operation on the first candidate channel value and the second candidate channel value to obtain a second initial fused channel value; and
using a third fusion function to perform a fusing operation on the first initial fused channel value and the second initial fused channel value to obtain the fused channel value.

15. The method of claim 12, wherein the target pixel value comprises a first target pixel value and a second target pixel value; and the step of determining the target pixel value of the pixel according to the target channel value of the pixel in the first feature region and the first image feature region comprises:

when the target channel value of the pixel in the first image feature region is less than a channel value threshold and when the regional feature value is less than a first feature value threshold, determining the target pixel value of the pixel to be the first target pixel value; and
when the target channel value of the pixel in the first image feature region is less than the channel value threshold and when the feature value of the region is greater than or equal to the first feature value threshold, determining the target pixel value of the pixel to be the second target pixel value.

16. The method of claim 12, wherein the target pixel value comprises a first target pixel value and a second target pixel value; and the step of determining the target pixel value of the pixel according to the target channel value of the pixel in the first feature region and the first image feature region comprises:

when the target channel value of the pixel in the first image feature region is greater than or equal to a channel value threshold and when the regional feature value is less than a second feature value threshold, determining the target pixel value of the pixel to be the first target pixel value; and
when the target channel value of the pixel in the first image feature region is greater than or equal to the channel value threshold and when the regional feature value is greater than or equal to the second feature value threshold, determining the target pixel value of the pixel to be the second target pixel value.

17. The method of claim 1, wherein the step of generating a compressed image according to the compressed image region comprises:

obtaining an initial coordinate of the image feature region in a target coordinate system;
according to the initial coordinate point, merging a compressed image region corresponding to the image feature region to obtain a merged image; and
determining the compressed image according to the merged image.

18. An image compression device comprising:

an acquisition unit, configured to obtain an image to be compressed, and the image to be compressed comprises a target object;
a determining unit, configured to determine a plurality of image feature regions in the image to be compressed that match the target object according to a channel value of a pixel in the image to be compressed;
a compression unit, configured to obtain a compression parameter corresponding to each image feature region, and compress each image feature region according to the compression parameter corresponding to each image feature region to obtain a compressed image region; and
a generating unit, configured to generate a compressed image according to the compressed image region.

19. A computing device, comprising a processor and a memory storing an application executed by the processor to perform the steps of the method as claimed in any one of claims 1 to 17.

20. A computer-readable storage medium, storing a plurality of computer-readable instructions executable by a processor to perform the steps of the method as claimed in any one of claims 1 to 17.

Computing device

FIG. 1

Obtain an image to be compressed, and the image to be compressed comprises a target object. ⟋S101

↓

Determine a plurality of image feature regions in the image to be compressed that match the target object according to a channel value of a pixel in the image to be compressed. ⟋S102

↓

Obtain a compression parameter corresponding to each image feature region, and compress each image feature region according to the compression parameter corresponding to each image feature region to obtain a compressed image region. ⟋S103

↓

Generate a compressed image according to the compressed image region. ⟋S104

FIG. 2

Perform a boundary recognition on the target object according to the channel value of the pixel in the image to be compressed, so as to determine the first image feature region from the image to be compressed. ⟋A1

↓

Perform a feature recognition on the target object according to the channel value of the pixel in the first image feature region, so as to extract the second image feature region from the first image feature region. ⟋A2

↓

Determine a third image feature region from the image to be compressed according to the first image feature region. ⟋A3

FIG. 3

Determine a grayscale image of the image to be compressed according to the channel value of the pixel in the image to be compressed. ⟋—a11

Identify an object boundary of the target object according to a gray value of a pixel in the grayscale image. ⟋—a12

Extract the first image feature region matching the target object from the image to be compressed according to the object boundary. ⟋—a13

FIG. 4

FIG. 5

FIG. 6

| Acquisition unit | | Determining unit | | Compression unit | | Generating unit |

**FIG. 7**

| Power supply |

Memory ⟷ Proccessor

Input unit

**FIG. 8**

## INTERNATIONAL SEARCH REPORT

<table>
<tr><td colspan="2">International application No.</td></tr>
<tr><td colspan="2">**PCT/CN2023/102672**</td></tr>
</table>

| A. | CLASSIFICATION OF SUBJECT MATTER |
|---|---|

G06T 9/00(2006.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNKI, CNTXT, DWPI, ENTXT, ENTXTC: 边界识别, 分割图像, 目标对象, 目标区域, 清晰度, 通道值, 图像区域, 图像压缩, 像素点, 信息熵, 压缩率, channel value, image compression, pixel, boundary identification, resolution

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 102647590 A (HUAWEI DEVICE CO., LTD.) 22 August 2012 (2012-08-22) description, paragraphs 2-87 | 1-3, 17-20 |
| X | CN 105721872 A (GUANGDONG OPPO MOBILE TELECOMMUNICATIONS CORP., LTD.) 29 June 2016 (2016-06-29) description, paragraphs 2-164 | 1-3, 17-20 |
| A | CN 114827625 A (WUHAN UNIVERSITY) 29 July 2022 (2022-07-29) entire document | 1-20 |
| A | CN 113470127 A (CHENGDU GUOXING YUHANG TECHNOLOGY CO., LTD.) 01 October 2021 (2021-10-01) entire document | 1-20 |
| A | US 2020034993 A1 (APICAL LTD. et al.) 30 January 2020 (2020-01-30) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 July 2023** | **11 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102672**

| Patent document cited in search report | | | Publication date (day/month/year) | Patent family member(s) | | | Publication date (day/month/year) |
|---|---|---|---|---|---|---|---|
| CN | 102647590 | A | 22 August 2012 | WO | 2013155880 | A1 | 24 October 2013 |
| CN | 105721872 | A | 29 June 2016 | None | | | |
| CN | 114827625 | A | 29 July 2022 | None | | | |
| CN | 113470127 | A | 01 October 2021 | CN | 113470127 | B | 26 November 2021 |
| US | 2020034993 | A1 | 30 January 2020 | US | 10916040 | B2 | 09 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211125051